# FASCICULE DE BREVET EUROPEEN

(11) **EP 3 320 316 B1**
(45) Date de publication et mention de la délivrance du brevet: **17.04.2019**
(21) Numéro de dépôt: 16744441.3
(22) Date de dépôt: 29.06.2016
(51) Int. Cl.: G01M 1/02, G01M 1/04

(54) **ROTOR D'ETALONNAGE MODULAIRE POUR EQUILIBREUSE HORIZONTALE**
MODULARER KALIBRIERROTOR FÜR EINE HORIZONTALE AUSWUCHTVORRICHTUNG
MODULAR CALIBRATION ROTOR FOR A HORIZONTAL BALANCER

(30) Priorité: 06.07.2015 FR 1556355
(43) Date de publication de la demande: 16.05.2018
(73) Titulaire: Safran Aircraft Engines, 75015 Paris (FR)
(72) Inventeur: LUINAUD, Alain, Roland, 77550 Moissy-Cramayel Cedex (FR); DECOCQ, Alain, 77550 Moissy-Cramayel Cedex (FR); GUENGANT, Christophe, 77550 Moissy-Cramayel Cedex (FR)
(74) Mandataire: Gevers & Orès
(86) Numéro de dépôt international: PCT/FR2016/051622
(87) Numéro de publication internationale: WO 2017/006016

(56) Documents cités:
- WO-A1-2011/070100
- DE-A1- 10 116 689
- US-A1- 2006 266 115
- Heinz Bloch ET AL: "Machinery Component Maintenance and Repair; Chapter 6: Balancing of Machinery Components", , 1 janvier 2005 (2005-01-01), pages 258-358, XP055270741, ISBN: 978-0-7506-7726-4 Extrait de l'Internet: URL:https://maaplibrary.files.wordpress.co m/2014/05/chapter-61.pdf [extrait le 2016-05-04]

## Description

L'invention concerne un rotor d'étalonnage modulaire pour le calibrage d'une équilibreuse horizontale, notamment un rotor permettant l'étalonnage de différents types d'équilibreuses du type de celles utilisées dans le domaine de la motorisation aéronautique aux fins d'équilibrage de rotors de turbomachines.

### ETAT DE LA TECHNIQUE ANTERIEURE

Une turbomachine comprend des rotors qui sont soit monoblocs, soit plus généralement constitués d'une pluralité d'éléments fabriqués séparément et assemblés mécaniquement. Un moteur à turbine à gaz comprend ainsi un ou plusieurs ensembles rotoriques constitués chacun d'un compresseur et d'une turbine. Pour assurer une certaine flexibilité dans l'entretien des moteurs, les ensembles sont constitués en modules interchangeables. Pour un rotor de moteur à turbine à gaz, on associe un module de compresseur à un module de turbine. Dans le cadre d'une réparation par exemple on peut ainsi remplacer le module compresseur, respectivement turbine, du rotor par un autre module.

L'équilibrage d'un rotor monobloc de grande longueur, ou au contraire l'équilibrage indépendant de modules de rotor, implique une précision élevée de l'équilibreuse. Il importe donc de régulièrement étalonner l'équilibreuse afin de prévenir toute erreur de mesure, qui aurait pour conséquence un défaut d'équilibrage des rotors.

Pour l'étalonnage d'une équilibreuse, on utilise conventionnellement un rotor d'équilibrage adapté au type particulier de l'équilibreuse à étalonner.

Pour cela, on peut utiliser des rotors étalons, comme cela est décrit dans le document DE-101.16.689-A1.

Un rotor d'équilibrage peut aussi être modulaire, c'est à dire qu'il comporte pour l'essentiel un fût d'orientation dont la périphérie comporte des points de fixation de masselottes d'équilibrage qui sont répartis axialement et angulairement de manière régulière autour de l'axe longitudinal du rotor d'étalonnage. De tels points de fixation sont par exemple constitués de taraudages destinés à recevoir des vis de fixation qui traversent les masselottes qui doivent être fixées sur le fût. Les vis sont calibrées et leur poids, connus, est pris en compte pour l'équilibrage comme part intégrante de la masselotte d'équilibrage. Un tel rotor est divulgué par le document Heinz Bloch et Al, « Machinery component maintenance and repair, chapter 6, 1er Janvier 2005, ISBN 978-0-7506-7726-4.

Il existe actuellement différentes configurations de rotors d'étalonnage, adaptés chacun à un type d'équilibreuse particulier.

Il existe notamment deux types de rotors d'étalonnage dédiés chacun à un mode particulier de montage en rotation. Il existe en particulier un type de rotor d'étalonnage, prévu pour un montage sur galets, dans lequel chacune des extrémités du rotor comporte une piste destinée à rouler sur une paire de galets d'axes parallèles à l'axe du rotor d'étalonnage. Il existe aussi un autre type de rotor d'étalonnage, prévu pour un montage tournant dit en demi-coquille, dans lequel chacune des extrémités du rotor comporte une gorge destinée à recevoir une bague intérieure d'un roulement. Dans ce dernier cas, une bague extérieure du roulement est immobilisée entre une demi-coquille ou chapeau et une bride, solidaires d'un bâti de l'équilibreuse. Enfin, il existe des rotors d'étalonnage combinant ces deux solutions.

Il existe également deux types de rotors d'étalonnage dédiés chacun à un mode particulier d'entraînement. Il existe en particulier un type de rotor d'étalonnage dédié à un entraînement par cardan en bout de rotor, et un autre type de rotor dédié à un entraînement par courroie, le rotor d'étalonnage comportant au moins une gorge, agencée dans une partie intermédiaire, qui est destinée à recevoir une courroie d'entraînement de l'équilibreuse.

Enfin, il existe des rotors d'étalonnage s'étendant uniquement entre leurs deux paliers, et des rotors d'étalonnage comportant au moins un tronçon s'étendant en porte à faux au-delà de l'un des paliers.

La multiplicité des types de rotor d'étalonnage dans un atelier d'équilibrage comportant des équilibreuses de types différents implique donc de disposer d'un rotor d'étalonnage spécifique pour chaque type d'équilibreuse, ce qui est particulièrement contraignant en terme de stockage, les rotors d'étalonnage étant des pièces particulièrement volumineuses.

Il existe donc un réel besoin de simplification du stock de rotors d'étalonnage à disposition dans un atelier d'équilibrage.

Pour satisfaire ce besoin, une première solution consiste à réduire le nombre de types différents d'équilibreuses utilisées. Cette solution n'est pas envisageable, car les équilibreuses sont destinées à équilibrer différents types de rotors et leur nombre ne peut être diminué.

Une seconde solution, faisant l'objet de la présente invention, consiste à proposer un rotor d'étalonnage modulaire susceptible de s'adapter à différents types d'équilibreuse.

Il est connu de proposer des adaptateurs pour l'accouplement de rotors sur une équilibreuse, comme cela a été décrit dans le document WO-2011/070100-A1 par exemple. Toutefois, de tels adaptateurs n'ont qu'une fonction d'accouplement et non de guidage.

Il n'est pas par ailleurs envisageable de proposer un guidage du rotor autre qu'un guidage agencé à ses extrémités, car les moyens de guidage ne doivent pas interférer avec la périphérie du rotor qui doit recevoir les masselottes d'équilibrage. Ainsi, une solution universelle mais agencée dans une partie intermédiaire du rotor, comme les paliers fluides décrits par le document US-2006/266115-A1, n'est pas envisageable.

### EXPOSÉ DE L'INVENTION

Dans le but de simplifier le stock de rotors d'étalonnage à disposition dans un atelier d'équilibrage, l'invention propose un rotor d'étalonnage pour équilibreuse horizontale, ledit rotor étant configuré pour être entraîné par des moyens d'entraînement de ladite équilibreuse et comportant au moins :
- un fût principal d'axe longitudinal A dont la périphérie comporte des points de fixation de masselottes d'équilibrage réparties axialement et angulairement de manière régulière autour dudit axe A, et
- des moyens de guidage en rotation dudit fût principal, agencés à chacune des extrémités dudit fût principal.

Conformément à l'invention, le rotor est modulaire et lesdits moyens de guidage comportent des adaptateurs aptes à être fixés aux extrémités du fût, chaque adaptateur étant d'un premier type, adapté à un guidage en rotation du fût sur galets, ou bien d'un second type, adapté un guidage en rotation du fût en demi-coquille, et chaque type d'adaptateur présentant un même moment d'inertie déterminé et pouvant être fixé de manière interchangeable sur le fût.

Selon d'autres caractéristiques de l'invention :
- le rotor d'étalonnage comporte un fût secondaire tubulaire d'axe longitudinal B dont la périphérie comporte des points de fixation de masselottes d'équilibrage répartis axialement et angulairement de manière régulière autour dudit axe B, et qui est apte à être fixé en porte-à-faux à une extrémité d'au moins un adaptateur, de façon que les axes longitudinaux A et B soient alignés,
- l'adaptateur du premier type comporte un élément tubulaire monobloc comportant au moins une première collerette d'extrémité apte à être fixée à une face d'extrémité complémentaire du fût principal, un tronçon intermédiaire comportant une piste de roulement configurée pour coopérer avec des galets de l'équilibreuse, et une seconde collerette d'extrémité qui est susceptible de recevoir sélectivement une collerette correspondante dudit fût secondaire,
- l'adaptateur de guidage du second type comporte des premier et second éléments tubulaires coaxiaux aptes à être emboîtés et fixés l'un dans l'autre, qui comportent respectivement une première collerette d'extrémité apte à être fixée à une collerette d'extrémité complémentaire du fût principal et une seconde collerette d'extrémité qui est susceptible de recevoir sélectivement une collerette correspondante dudit fût secondaire, et qui déterminent à leur jonction une gorge annulaire de réception et d'immobilisation axiale d'une bague intérieure d'un roulement de guidage en demi-coquille, ledit roulement comportant une bague extérieure immobilisée entre une demi-coquille et une bride de l'équilibreuse,
- le premier élément tubulaire comporte, à une extrémité opposée à sa collerette d'extrémité, une portée tronconique externe configurée pour être reçue dans une portée tronconique interne du second élément tubulaire, une portée cylindrique adjacente à ladite portée tronconique, et un tronçon tubulaire adjacent à la portée cylindrique de diamètre supérieur à ladite portée cylindrique, ladite portée cylindrique délimitant la gorge entre ledit tronçon tubulaire et le second élément tubulaire, et en ce que les premier et second éléments tubulaires coaxiaux sont fixés l'un à l'autre par l'intermédiaire de vis qui traversent axialement un desdits éléments tubulaires, qui sont reçues dans l'autre élément tubulaire, et dont le serrage permet de bloquer ladite bague intérieure du roulement dans la gorge.
- chaque adaptateur comporte une portée annulaire tronconique de centrage qui s'étend axialement à partir de chacune de ses collerettes d'extrémité, et qui est apte à coopérer avec une portée tronconique interne complémentaire correspondante du fût principal ou du fût secondaire,
- le rotor d'étalonnage comporte des moyens configurés pour coopérer avec des moyens d'entraînement par courroie ou des moyens d'entraînement par cardan de l'équilibreuse,
- les moyens configurés pour coopérer avec les moyens d'entraînement par courroie comportent au moins une portée qui est formée à la périphérie du fût principal, qui est agencée notamment dans une partie intermédiaire dudit fût principal, et qui est apte à recevoir une courroie d'entraînement de l'équilibreuse,
- les moyens configurés pour coopérer avec les moyens d'entraînement par cardan de l'équilibreuse comportent :
   - la seconde collerette d'extrémité de l'adaptateur de guidage, qui est configurée pour être complémentaire d'une collerette d'accouplement du cardan, et,
   - des moyens de fixation, notamment par boulonnage, interposés entre ladite seconde collerette d'extrémité et ladite collerette d'accouplement.
- le rotor d'étalonnage comporte un embout de butée qui est configuré pour être fixé à une extrémité libre d'au moins un des adaptateurs et/ou du fût secondaire pour limiter les déplacements axiaux du rotor en fonctionnement.

### PRESENTATION DES FIGURES

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés dans lesquels :
- la figure 1 est une vue schématique selon une direction transversale d'un rotor d'étalonnage selon un état antérieur de la technique entraîné par cardan et monté sur galets ;
- la figure 2 est une vue en perspective d'un fût principal pour un rotor d'étalonnage selon l'invention;
- la figure 3 est une vue en perspective d'un fût secondaire pour un rotor d'étalonnage selon l'invention;
- la figure 4 est une vue en perspective d'un adaptateur d'un premier type pour un rotor d'étalonnage selon l'invention;
- la figure 5 est une vue en perspective d'un adaptateur d'un second type pour un rotor d'étalonnage selon l'invention, muni de son roulement;
- la figure 6 est une vue en perspective de l'adaptateur de la figure 5, monté en demi-coquille;
- la figure 7 est une vue en perspective de l'adaptateur de la figure 5, muni d'une butée;
- les figures 8 et 9 sont des vues en coupe axiale des premier et second éléments tubulaires de l'adaptateur de la figure 5;
- la figure 10 est une vue coupe axiale de l'adaptateur de la figure 5, monté en demi-coquille;
- la figure 11 est une vue schématique selon une direction transversale d'un rotor d'étalonnage selon l'invention entraîné par cardan et monté sur galets ;
- la figure 12 est une vue schématique selon une direction transversale d'un rotor d'étalonnage selon l'invention entraîné par courroie et monté sur galets ;
- la figure 13 est une vue schématique selon une direction transversale d'un rotor d'étalonnage selon l'invention comportant un fût principal entraîné par cardan et monté tournant en demi-coquille ;
- la figure 14 est une vue schématique selon une direction transversale d'un rotor d'étalonnage selon l'invention comportant un fût principal entraîné par courroie et monté tournant en demi-coquille ;
- la figure 15 est une vue schématique selon une direction transversale d'un rotor d'étalonnage selon l'invention comportant un fût principal entraîné par cardan et monté sur demi-coquille et galets ;
- la figure 16 est une vue schématique selon une direction transversale d'un rotor d'étalonnage selon l'invention comportant un fût principal entraîné par courroie et monté sur demi-coquille et galets ;
- la figure 17 est une vue schématique selon une direction transversale d'un rotor d'étalonnage en variante de l'invention comportant un fût principal entraîné par cardan et monté sur galets et demi-coquille ;
- la figure 18 est une vue schématique selon une direction transversale d'un rotor d'étalonnage en variante de l'invention comportant un fût principal entraîné par courroie et monté sur galets et demi-coquille ;
- la figure 19 est une vue schématique selon une direction transversale d'un rotor d'étalonnage selon l'invention comportant un fût principal entraîné par cardan, monté sur galets, et comportant un fût secondaire en porte-à faux ;
- la figure 20 est une vue schématique selon une direction transversale d'un rotor d'étalonnage selon l'invention comportant un fût principal entraîné par cardan, monté tournant en demi-coquille, et comportant un fût secondaire en porte-à faux.

### DESCRIPTION DETAILLEE D'UN MODE DE REALISATION DE L'INVENTION.

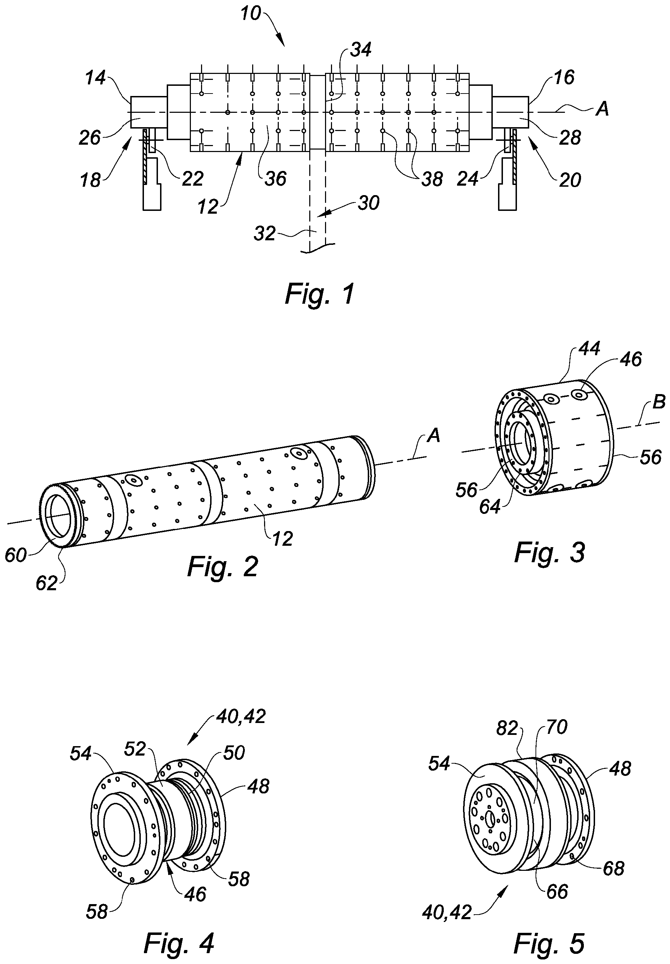

On a représenté à la figure 1 un rotor d'étalonnage 10 pour équilibreuse horizontale réalisé conformément à un état antérieur de la technique.

De manière connue de l'état de la technique, le rotor d'étalonnage 10 est un rotor monobloc d'axe longitudinal A comportant un fût 12 qui est supporté à ses deux extrémités opposées 14 et 16 par deux moyens de guidage 18 et 20, respectivement. Dans le cas présent, les moyens de guidage 18 et 20 sont des portées cylindriques 26, 28 d'extrémité du fût 12 supportées par des paliers à galets 22, 24 de l'équilibreuse. Le fût 10 est par ailleurs susceptible d'être entraîné en rotation par des moyens d'entraînement 30 comportant une courroie 32, représentée en traits pointillés, qui est reçue dans une gorge intermédiaire 34 formée dans la périphérie 36 du fût 12. La périphérie 36 du fût 12 comporte également des points de fixation 38 répartis axialement et angulairement de manière régulière autour dudit axe A, notamment des taraudages, destinés à permettre la fixation de masselottes (non représentées) à la surface du fût 12.

Comme on l'a vu précédemment, un tel rotor 10 est destiné à permettre uniquement l'équilibrage d'un type d'équilibreuse déterminée, comportant des paliers à galets 22, 24, et un entraînement par courroie 32.

Il existe en effet en variante des équilibreuses comportant des entraînements par courroie, des équilibreuses comportant des paliers montés tournants en demi-coquille et des fûts en porte-à faux sur les paliers.

L'usage d'un tel rotor 10 est donc limité et il ne peut être utilisé sur un autre type d'équilibreuse.

La multiplicité des types de rotor dans un atelier d'équilibrage comportant des équilibreuses de types différents implique donc de disposer d'un rotor 10 d'étalonnage spécifique pour chaque type d'équilibreuse, ce qui est particulièrement contraignant en terme de stockage, les rotors d'étalonnage étant des pièces particulièrement volumineuses.

Il existe donc un réel besoin de simplification du stock de rotors d'étalonnage à disposition dans ledit atelier d'équilibrage.

Pour remédier à l'inconvénient de la multiplicité des rotors existants, l'invention propose un rotor 10 d'étalonnage modulaire adaptable à différents types d'équilibreuses et permettant de proposer différentes configurations globales de fût.

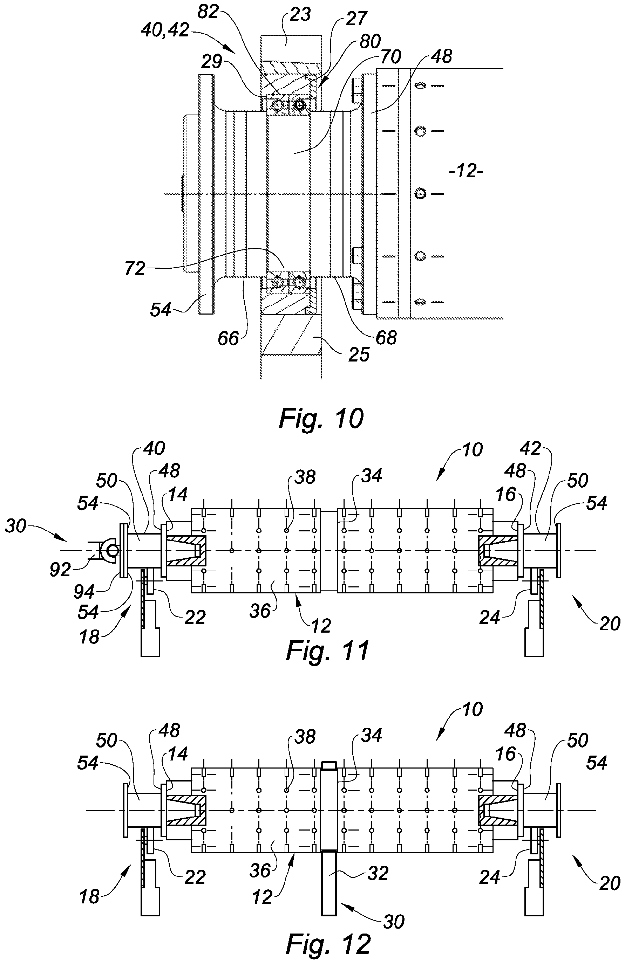

Dans ce but, comme l'illustrent les figures 11 à 20, l'invention propose un rotor d'étalonnage 10 pour équilibreuse horizontale, qui est configuré pour être entraîné par des moyens d'entraînement 30 et qui comporte de manière connue au moins un fût 12 principal d'axe longitudinal A dont la périphérie 36 comporte des points 38 de fixation de masselottes d'équilibrage répartis axialement et angulairement de manière régulière autour dudit axe A et des moyens de guidage 18, 20 en rotation dudit fût principal, agencés à chacune des extrémités 14, 16 dudit fût principal 12.

Conformément à l'invention, le rotor 12 est modulaire et chaque moyen de guidage 16, 18 comporte des adaptateurs 40, 42 aptes à être fixés aux extrémités opposées 14, 16 du fût.

Avantageusement, comme l'illustrent les figures 3 et 4, l'adaptateur 40, 42 peut être d'un premier type, adapté à un guidage en rotation du fût 12 sur les galets 22, 24. En variante, comme l'illustrent les figures 5, 6 et 10, il peut être d'un second type, adapté à un guidage en rotation du fût 12 en demi-coquille 23, c'est-à-dire que l'adaptateur est monté entre une bride 25 de l'équilibreuse et une demi-coquille 23 qui est rapportée sur ladite bride 25.

Dans les deux cas, une caractéristique essentielle est que chaque type d'adaptateur 40, 42 présente un même moment d'inertie déterminé, identique d'un type à l'autre, et qu'il peut être fixé de manière interchangeable sur le fût. Le détail des adaptateurs 40, 42 et de leur fixation sera explicité plus en avant dans la présente description.

Ainsi, le moment d'inertie global du fût 12 est inchangé, que le guidage soit effectué par roulement sur les galets 22, 24 ou dans une demi-coquille 23 fixée à une bride 25 solidaire d'un bâti de l'équilibreuse.

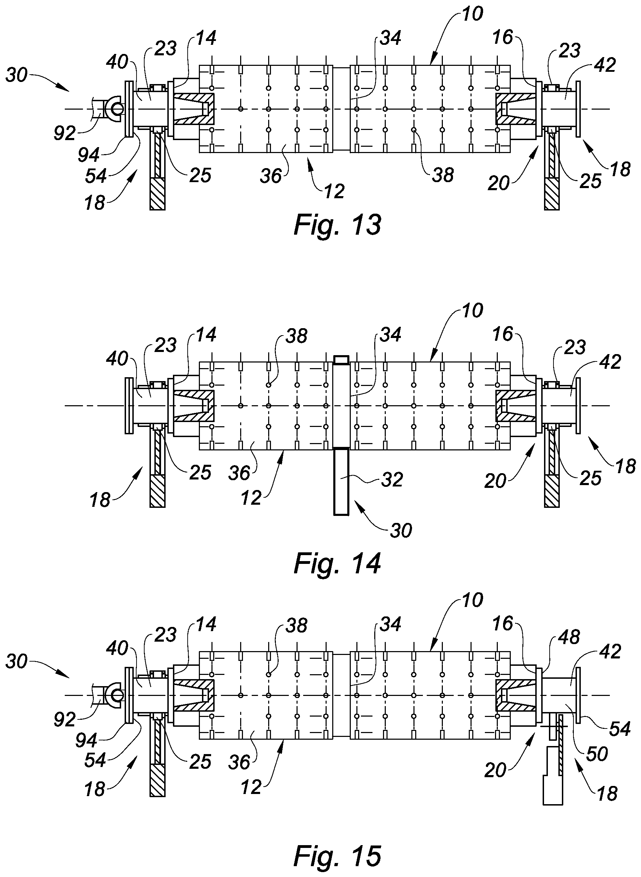

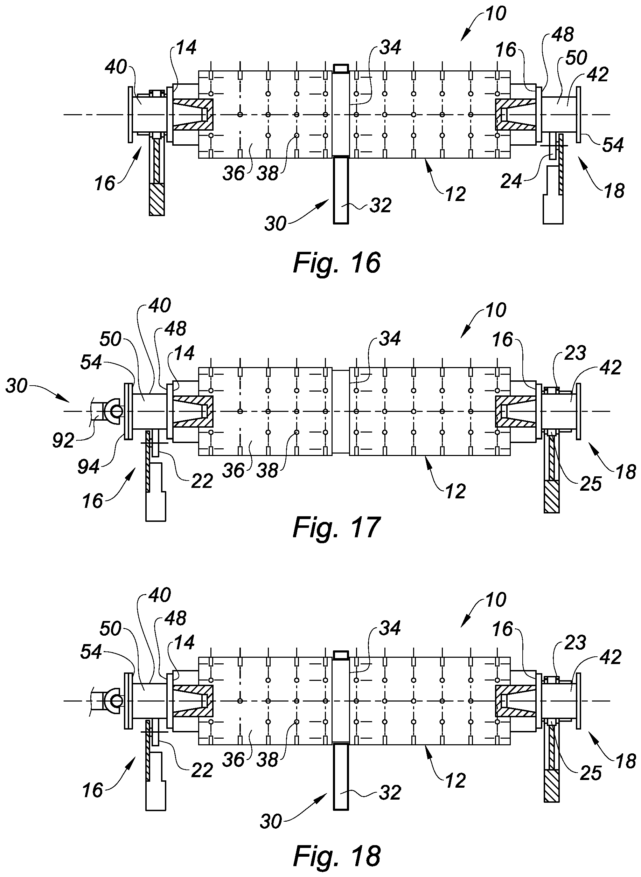

Comme l'illustrent les figures 10 à 20, plusieurs configurations sont possibles. Par exemple, le fût 12 peut comporter des adaptateurs 40, 42 à ses deux extrémités 14, 16 pour un guidage sur galets 22, 24, comme représenté aux figures 11, 12, et 19. Le fût 12 peut comporter des adaptateurs 40, 42 à ses deux extrémités 14, 16 pour un guidage en demi-coquille 23 comme représenté aux figures 13, 14 et 20. Un guidage mixte, comportant un adaptateur 40 à l'extrémité 14 pour un guidage sur galets 22 et un adaptateur 42 à l'extrémité 16 pour un guidage en demi-coquille 23 peut aussi être envisagé comme l'illustrent les figures 17 et 18. Inversement, un guidage mixte, comportant un adaptateur 40 à l'extrémité 14 pour un guidage en demi-coquille 23 et un adaptateur 42 à l'extrémité 16 pour un guidage sur galets 22 peut aussi être envisagé comme l'illustre la figure 16.

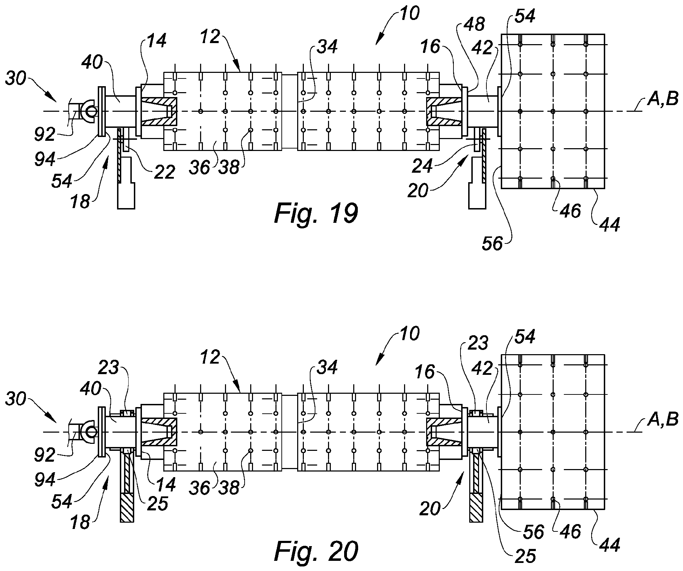

Avantageusement, comme l'illustrent la figure 3 et les figures 19 et 20, le rotor 12 d'étalonnage peut comporter un fût secondaire 44 tubulaire d'axe longitudinal B dont la périphérie comporte des points de fixation 46 de masselottes d'équilibrage répartis axialement et angulairement de manière régulière autour dudit axe B. Comme l'illustrent les figures 19 et 20, le fût secondaire 44 est apte à être fixé en porte-à-faux à une extrémité d'au moins un adaptateur 42, de façon que les axes longitudinaux A et B soient alignés. Le détail de la fixation du fût secondaire 44 sera explicité plus en avant dans la présente description.

Le fût secondaire 44 permet avantageusement de reproduire la configuration d'un rotor comportant une partie en porte-à faux par rapport aux paliers 18, 20.

Pour permettre son roulement sur les galets 22 ou 24, chaque adaptateur du premier type 40, 42 tel que représenté à la figure 4 et aux figures 11, 12 et 19 comporte un élément tubulaire monobloc 46 comportant au moins une première collerette 48 d'extrémité apte à être fixée à une face d'extrémité complémentaire 16 du fût principal 12, un tronçon intermédiaire 50 comportant une piste de roulement 52 configurée pour coopérer avec les galets 22, 24 de l'équilibreuse, et une seconde collerette d'extrémité 54. La collerette 54 est susceptible de demeurer libre, comme représenté aux figures 11 ou 12, ou de recevoir sélectivement une collerette 56 correspondante du fût secondaire 44 apte à être monté en porte à faux sur ladite collerette 54.

De préférence, chaque adaptateur 40, 42 est symétrique par rapport à un plan axial médian, et ses collerettes 48, 54 sont identiques, de sorte qu'il n'est pas nécessaire de prendre en considération l'orientation de l'adaptateur 40, 42 avant son montage.

Chaque collerette 48, 54 comporte, comme l'illustre la figure 4, une série de perçages 58 répartis angulairement sur sa périphérie, qui sont destinés à être alignés avec des perçages similaires 60 portées par une face d'extrémité correspondante 62 du fût 12 pour permettre une fixation de l'adaptateur 40, 42 sur le fût 12. De même, les perçages 58 peuvent être alignés avec des perçages similaires 64 portés par la collerette d'extrémité correspondante 56 du fût secondaire 44 pour permettre une fixation dudit fût secondaire 44 sur l'adaptateur 40, 42.

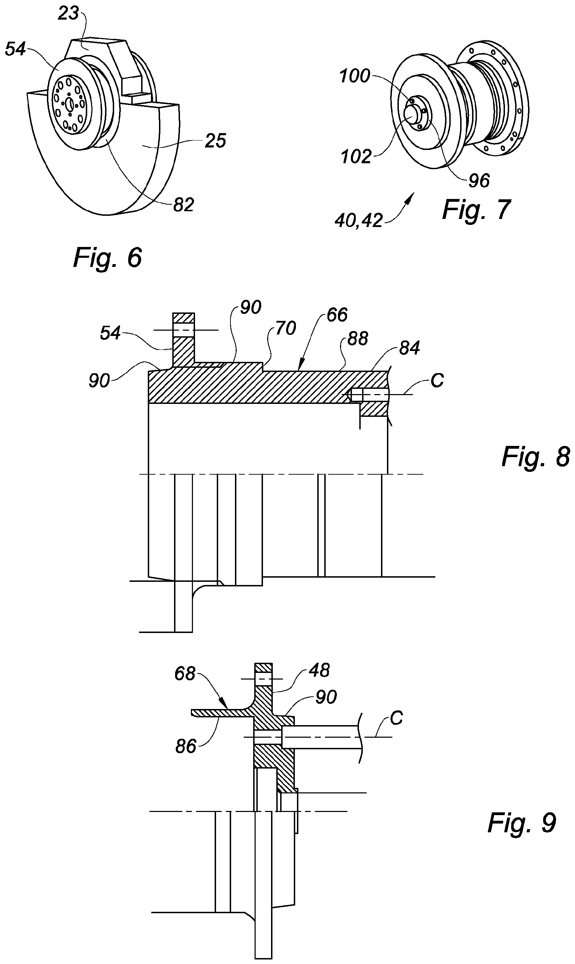

Pour permettre son roulement dans la demi-coquille 23 et dans la bride 25 associée, chaque adaptateur de guidage 40, 42 du second type comporte, comme l'illustrent les figures 8 à 10 des premier et second éléments tubulaires 66, 68 coaxiaux aptes à être emboîtés et fixés l'un dans l'autre. De la même manière que pour l'adaptateur précédent, ces éléments 66, 68 comportent respectivement une première collerette d'extrémité 48 apte à être fixée à une collerette d'extrémité 62 complémentaire du fût principal 12 et une seconde collerette d'extrémité 54 qui est susceptible de demeurer libre, comme représenté aux figures 13, 14, ou de recevoir sélectivement une collerette correspondante 56 dudit fût secondaire 44. Les éléments 66, 68 délimitent par ailleurs à leur jonction une gorge annulaire de réception 70 et d'immobilisation axiale d'une bague intérieure 72 d'un roulement de guidage 80 en demi-coquille. Comme l'illustre la figure 10, ledit roulement 80 comporte une bague extérieure 82 qui est immobilisée entre la demi-coquille 23 et la bride 25 de l'équilibreuse.

Comme l'illustrent plus particulièrement les figures 8 et 9, le premier élément tubulaire 66 comporte, à une extrémité opposée à sa collerette d'extrémité 54, une portée tronconique externe 84 configurée pour être reçue dans une portée tronconique interne 86 du second élément tubulaire 68, une portée cylindrique adjacente 88 à ladite portée tronconique 84 et destinée à délimiter la gorge 70, et un tronçon tubulaire 90 adjacent à la portée cylindrique 88 de diamètre supérieur à ladite portée cylindrique 88. La portée cylindrique 88 délimite donc la gorge 70 entre ledit tronçon tubulaire 88 et le second élément tubulaire 68.

Les premier et second éléments tubulaires coaxiaux 66 et 68 sont destinés à être fixés l'un à l'autre par l'intermédiaire de vis (non représentées) d'axe C qui traversent axialement un desdits éléments tubulaires, en l'occurrence le second élément tubulaire 68, et qui sont reçues dans l'autre élément tubulaire, c'est-à-dire le premier élément tubulaire 66. Le serrage de ces vis permet de bloquer la bague intérieure 72 du roulement 80 dans la gorge 70.

Sur la figure 10, on a par ailleurs représenté la fixation du roulement 80 dans la demi-coquille 23 et dans la bride 25. Le roulement 80 comporte deux rangées de billes à contact oblique, dont la bague extérieure est immobilisée axialement dans la demi-coquille 23 et dans la bride 25, d'un côté par un épaulement 29 et de l'autre un anneau élastique 27, mais il sera compris que cette configuration n'est pas limitative de l'invention.

Dans le mode de réalisation préféré de l'invention, comme l'illustre par exemple les figures 8 et 9, chaque adaptateur 40, 42 comporte une portée annulaire tronconique de centrage 90 qui s'étend axialement à partir de chacune de ses collerettes d'extrémité 50, 54, et qui est apte à coopérer avec une portée tronconique interne complémentaire correspondante (non représentée) du fût principal 12 ou du fût secondaire 44.

La portée tronconique 90 a été représentée dans le cadre du deuxième type d'adaptateur 40, 42, mais il sera compris qu'une portée 90 analogue est prévue pour le premier type d'adaptateur 40, 42.

Une autre caractéristique essentielle du rotor 10 d'étalonnage selon l'invention est qu'il comporte des moyens configurés pour coopérer avec des moyens d'entraînement par courroie 32 ou des moyens d'entraînement par cardan 92 de l'équilibreuse.

Ainsi, le rotor 10 peut être entraîné en rotation de deux manières différentes. Comme l'illustre la figure 1 et les figures 11 à 20, les moyens configurés pour coopérer avec les moyens d'entraînement 30 par courroie 32 comportent au moins une gorge 34 qui est formée à la périphérie du fût principal 12, qui est agencée notamment dans une partie intermédiaire dudit fût principal, et qui est apte à recevoir une courroie d'entraînement 32 de l'équilibreuse. Cette gorge 34 est utilisée pour l'entraînement des rotors 10 dans le cas des rotors présentés sur les figures 12, 14, 16 et 18.

Par ailleurs, les moyens configurés pour coopérer avec des moyens d'entraînement 30 par cardan 92 de l'équilibreuse comportent la seconde collerette d'extrémité 54 de l'adaptateur 40 de guidage, qui est configurée pour être configurée pour être complémentaire d'une collerette 94 d'accouplement du cardan 92, et des moyens de fixation, notamment par boulonnage (non représentés) qui sont interposés entre ladite seconde collerette d'extrémité 54 et ladite collerette d'accouplement 94 . Cette configuration a été représentée aux figures 10-11, 13, 15, 17, 19 et 20.

Ainsi, il sera compris que le rotor 10 peut être indifféremment entraîné par la courroie 34 ou par le cardan 92, et que le rotor 10 peut être ainsi adapté à différents types d'équilibreuses.

Enfin, on remarquera que le rotor d'étalonnage 10 est susceptible d'être arrêté en butée, notamment dans la cadre d'un montage en rotation sur les galets 22, 24. A cet effet, le rotor 10 peut comporter, comme l'illustre la figure 7, un embout de butée 96 qui est configuré pour être fixé à une extrémité libre d'au moins un des adaptateurs 40, 42 et/ou du fût secondaire 44 pour limiter les déplacements axiaux du rotor 10 en fonctionnement.

La figure 7 illustre un exemple d'une telle réalisation. Un adaptateur 40, 42 reçoit à l'extrémité de sa collerette 54 un élément 96 en forme de disque qui est fixé à la collerette par des vis 100 et qui comporte une touche de butée 102 en forme de téton qui est apte à arrêter le rotor 10 axialement en prenant appui sur un élément (non représenté) solidaire du bâti de l'équilibreuse.

L'invention permet donc de proposer un rotor 10 d'étalonnage apte d'une part à reproduire les configurations d'un rotor 10 réel, et d'autre part susceptible d'être utilisé pour étalonner des équilibreuses de types différents, ce qui permet de réduire de manière sensible le stock de rotors d'étalonnage mis en oeuvre dans un atelier d'équilibrage.

## Revendications

1. Rotor d'étalonnage (10) pour équilibreuse horizontale, ledit rotor étant configuré pour être entraîné par des moyens (30) d'entraînement de ladite équilibreuse et comportant au moins :
- un fût principal (12) d'axe longitudinal A dont la périphérie comporte des points (38) de fixation de masselottes d'équilibrage répartis axialement et angulairement de manière régulière autour dudit axe A, et
- des moyens de guidage en rotation (18, 20) dudit fût principal (12), agencés à chacune des extrémités (14, 16) dudit fût principal (12), **caractérisé en ce que** le rotor (10) est modulaire et **en ce que** lesdits moyens de guidage (18, 20) comportent des adaptateurs (40, 42) aptes à être fixés aux extrémités (14, 16) du fût (12), chaque adaptateur (40, 42) étant d'un premier type, adapté à un guidage en rotation du fût (12) sur galets (22, 24), ou bien d'un second type, adapté à un guidage en rotation du fût en demi-coquille (23), et chaque type d'adaptateur (40, 42) présentant un même moment d'inertie déterminé et pouvant être fixé de manière interchangeable sur le fût (12).

2. Rotor d'étalonnage (10) selon la revendication précédente, **caractérisé en ce qu'**il comporte un fût secondaire tubulaire (44) d'axe longitudinal B dont la périphérie comporte des points de fixation (46) de masselottes d'équilibrage répartis axialement et angulairement de manière régulière autour dudit axe B, et qui est apte à être fixé en porte-à-faux à une extrémité d'au moins un adaptateur (40, 42), de façon que les axes longitudinaux A et B soient alignés.

3. Rotor d'étalonnage (10) selon la revendication précédente, **caractérisé en ce que** l'adaptateur (40, 42) du premier type comporte un élément tubulaire monobloc (46) comportant au moins une première collerette d'extrémité (48) apte à être fixée à une face d'extrémité (16) complémentaire du fût principal (12), un tronçon intermédiaire (50) comportant une piste de roulement (52) configurée pour coopérer avec des galets (22, 24) de l'équilibreuse, et une seconde collerette d'extrémité (54) qui est susceptible de recevoir sélectivement une collerette correspondante (56) dudit fût secondaire (44).

4. Rotor d'étalonnage (10) selon la revendication 2, caractérisé en ce l'adaptateur de guidage (40, 42) du second type comporte des premier et second éléments tubulaires coaxiaux (66, 68) aptes à être emboîtés et fixés l'un dans l'autre, qui comportent respectivement une première collerette d'extrémité (48) apte à être fixée à une collerette d'extrémité complémentaire (62) du fût principal (12) et une seconde collerette d'extrémité (54) qui est susceptible de recevoir sélectivement une collerette correspondante (56) dudit fût secondaire (44), et qui déterminent à leur jonction une gorge annulaire (70) de réception et d'immobilisation axiale d'une bague intérieure (72) d'un roulement (80) de guidage en demi-coquille, ledit roulement (80) comportant une bague extérieure (82) immobilisée entre une demi-coquille (23) et une bride (25) de l'équilibreuse.

5. Rotor d'étalonnage (10) selon la revendication précédente, **caractérisé en ce que** le premier élément tubulaire (66) comporte, à une extrémité opposée à sa collerette d'extrémité (54), une portée tronconique externe (84) configurée pour être reçue dans une portée tronconique interne (86) du second élément tubulaire (68), une portée cylindrique adjacente (88) à ladite portée tronconique (84), et un tronçon tubulaire (90) adjacent à la portée cylindrique (88) de diamètre supérieur à ladite portée cylindrique (88), ladite portée cylindrique (88) délimitant la gorge (70) entre ledit tronçon tubulaire (88) et le second élément tubulaire (68), et **en ce que** les premier et second éléments tubulaires coaxiaux (66, 68) sont fixés l'un à l'autre par l'intermédiaire de vis qui traversent axialement un desdits éléments tubulaires (68), qui sont reçues dans l'autre élément tubulaire (66), et dont le serrage permet de bloquer ladite bague intérieure du roulement (80) dans la gorge (70).

6. Rotor d'étalonnage (10) selon l'une des revendications 3 à 5, **caractérisé en ce que** chaque adaptateur comporte une portée annulaire tronconique de centrage (90) qui s'étend axialement à partir de chacune de ses collerettes d'extrémité (50, 54), et qui est apte à coopérer avec une portée tronconique interne complémentaire correspondante du fût principal (12) ou du fût secondaire (44).

7. Rotor d'étalonnage (10) selon l'une des revendications 3 à 6, **caractérisé en ce qu'**il comporte des moyens configurés pour coopérer avec des moyens d'entraînement (30) par courroie (32) ou des moyens d'entraînement par cardan (92) de l'équilibreuse.

8. Rotor d'étalonnage (10) selon la revendication 7, **caractérisé en ce que** les moyens configurés pour coopérer avec les moyens d'entraînement (30) par courroie (32) comportent au moins une gorge (34) qui est formée à la périphérie du fût principal (12), qui est agencée notamment dans une partie intermédiaire dudit fût principal (12), et qui est apte à recevoir une courroie d'entraînement (32) de l'équilibreuse.

9. Rotor d'étalonnage (10) selon la revendication 8, **caractérisé en ce que** les moyens configurés pour coopérer avec les moyens d'entraînement (30) par cardan (92) de l'équilibreuse comportent :
- la seconde collerette d'extrémité (54) de l'adaptateur de guidage, qui est configurée pour être complémentaire d'une collerette (94) d'accouplement du cardan (92), et
- des moyens de fixation, notamment par boulonnage, interposés entre ladite seconde collerette d'extrémité (54) et ladite collerette d'accouplement (92).

10. Rotor d'étalonnage (10) selon l'une des revendications 2 à 9, **caractérisé en ce qu'**il comporte un embout de butée (96) qui est configuré pour être fixé à une extrémité libre d'au moins un des adaptateurs (40, 42) et/ou du fût secondaire pour limiter les déplacements axiaux du rotor (10) en fonctionnement.

## Patentansprüche

1. Kalibrierrotor (10) für eine horizontale Auswuchtvorrichtung, wobei der Rotor konfiguriert ist, um durch Antriebsmittel (30) der Auswuchtvorrichtung angetrieben zu werden und mindestens enthält:
- einen Haupthohlkörper (12) mit einer Längsachse A, dessen Peripherie Befestigungspunkte (38) von Auswuchtgewichten enthält, die regelmäßig axial und winklig um die Achse A verteilt sind, und
- drehende Führungsmittel (18, 20) des Haupthohlkörpers (12), die an jedem der Enden (14, 16) des Haupthohlkörpers (12) angeordnet sind, **dadurch gekennzeichnet, dass** der Rotor (10) modular ist und dadurch, dass die Führungsmittel (18, 20) Adapter (40, 42) enthalten, die imstande sind, an den Enden (14, 16) des Hohlkörpers (12) befestigt zu werden, wobei jeder Adapter (40, 42) eines ersten Typs, der an eine Drehführung des Hohlkörpers (12) auf Rollen (22, 24) angepasst ist, oder eines zweiten Typs ist, der an eine halbschalige (23) Drehführung des Hohlkörpers angepasst ist, und jeder Typ von Adapter (40, 42) einen gleichen bestimmten Trägheitsmoment aufweist und auf dem Hohlkörper (12) auswechselbar befestigt werden kann.

2. Kalibrierrotor (10) nach dem vorstehenden Anspruch, **dadurch gekennzeichnet, dass** er einen rohrförmigen sekundären Hohlkörper (44) mit einer Längsachse B enthält, dessen Peripherie Befestigungspunkte (46) von Auswuchtgewichten enthält, die regelmäßig axial und winklig um die Achse B verteilt sind, und der imstande ist, freitragend an einem Ende von mindestens einem Adapter (40, 42) befestigt zu werden, sodass die Längsachsen A und B fluchtend eingerichtet sind.

3. Kalibrierrotor (10) nach dem vorstehenden Anspruch, **dadurch gekennzeichnet, dass** der Adapter (40, 42) des ersten Typs ein einteiliges rohrförmiges Element (46), das mindestens einen ersten Endkragen (48) enthält, der imstande ist, an einer zum Haupthohlkörper (12) komplementären Endseite (16) befestigt zu werden, einen dazwischenliegenden Abschnitt (50), der eine Lagerbahn (52) enthält, die konfiguriert ist, um mit Rollen (22, 24) der Auswuchtvorrichtung zusammenzuwirken, und einen zweiten Endkragen (54), der dazu geeignet ist, selektiv einen entsprechenden Kragen (56) des sekundären Hohlkörpers (44) aufzunehmen, enthält.

4. Kalibrierrotor (10) nach Anspruch 2, **dadurch gekennzeichnet, dass** der Führungsadapter (40, 42) des zweiten Typs ein erstes und zweites koaxiales rohrförmiges Element (66, 68) enthält, die imstande sind, ineinandergefügt und ineinander befestigt zu werden, die jeweils einen ersten Endkragen (48), der imstande ist, an einem komplementären Endkragen (62) des Haupthohlkörpers (12) befestigt zu werden, und einen zweiten Endkragen (54), der dazu geeignet ist, selektiv einen entsprechenden Kragen (56) des sekundären Hohlkörpers (44) aufzunehmen, enthalten, und die an ihrer Verbindung eine axiale ringförmige Aufnahme- und Feststellnut (70) eines inneren Rings (72) eines Lagers (80) einer halbschaligen Führung bestimmen, wobei das Lager (80), einen äußeren Ring (82) enthält, der zwischen einer Halbschale (23) und einem Flansch (25) der Auswuchtvorrichtung festgestellt ist.

5. Kalibrierrotor (10) nach dem vorstehenden Anspruch, **dadurch gekennzeichnet, dass** das erste rohrförmige Element (66) an einem gegenüberliegenden Ende seines Endkragens (54) einen äußeren kegelstumpfartigen Zapfen (84), der konfiguriert ist, um in einem inneren kegelstumpfartigen Zapfen (86) des zweiten rohrförmigen Elements (68) aufgenommen zu werden, einen zylindrischen Zapfen (88), der zum kegelstumpfartigen Zapfen (84) benachbart ist, und einen rohrförmigen Abschnitt (90), der zum zylindrischen Zapfen (88) benachbart ist und einen größeren Durchmesser als der zylindrische Zapfen (88) aufweist, enthält, wobei der zylindrische Zapfen (88) die Nut (70) zwischen dem rohrförmigen Abschnitt (88) und dem zweiten rohrförmigen Element (68) abgrenzt, und dadurch, dass das erste und zweite koaxiale rohrförmige Element (66, 68) durch Schrauben, die eines der rohrförmigen Elemente (68) axial durchqueren, die im anderen rohrförmigen Element (66) aufgenommen werden, und deren Festziehen ermöglicht, den inneren Ring des Lagers (80) in der Nut (70) zu blockieren, aneinander befestigt sind.

6. Kalibrierrotor (10) nach einem der Ansprüche 3 bis 5, **dadurch gekennzeichnet, dass** jeder Adapter einen kegelstumpfartigen ringförmigen Zentrierzapfen (90) enthält, der sich axial von jedem seiner Endkragen (50, 54) aus erstreckt, und der imstande ist, mit einem entsprechenden komplementären inneren kegelstumpfartigen Zapfen des Haupthohlkörpers (12) oder des sekundären Hohlkörpers (44) zusammenzuwirken.

7. Kalibrierrotor (10) nach einem der Ansprüche 3 bis 6, **dadurch gekennzeichnet, dass** er Mittel enthält, die konfiguriert sind, um mit Antriebsmitteln (30) durch einen Riemen (32) oder Antriebsmitteln durch eine Kardanwelle (92) der Auswuchtvorrichtung zusammenzuwirken.

8. Kalibrierrotor (10) nach Anspruch 7, **dadurch gekennzeichnet, dass** die Mittel, die konfiguriert sind, um mit den Antriebsmitteln (30) durch einen Riemen (32) zusammenzuwirken, mindestens eine Nut (34) enthalten, die an der Peripherie des Haupthohlkörpers (12) gebildet ist, die insbesondere in einem dazwischenliegenden Teil des Haupthohlkörpers (12) angeordnet ist, und die imstande ist, einen Antriebsriemen (32) der Auswuchtvorrichtung aufzunehmen.

9. Kalibrierrotor (10) nach Anspruch 8, **dadurch gekennzeichnet, dass** die Mittel, die konfiguriert sind, um mit den Antriebsmitteln (30) durch eine Kardanwelle (92) der Auswuchtvorrichtung zusammenzuwirken, enthalten:
- den zweiten Endkragen (54) des Führungsadapters, der konfiguriert ist, um zu einem Kupplungskragen (94) der Kardanwelle (92) komplementär zu sein, und
- Fixierungsmittel, insbesondere durch Bolzenverbindung, die zwischen dem zweiten Endkragen (54) und dem Kupplungskragen (92) eingesetzt sind.

10. Kalibrierrotor (10) nach einem der Ansprüche 2 bis 9, **dadurch gekennzeichnet, dass** er eine Anschlagkappe (96) enthält, die konfiguriert ist, um an einem freien Ende von mindestens einem der Adapter (40, 42) und/oder des sekundären Hohlkörpers befestigt zu werden, um die axialen Bewegungen des Rotors (10), der in Betrieb ist, zu begrenzen.

## Claims

1. Calibration rotor (10) for a horizontal balancing machine, said rotor being designed for being driven by means (30) for driving said balancing machine, and comprising at least:
- a main barrel (12) which has a longitudinal axis A and of which the periphery comprises points (38) for attaching balance weights which are evenly distributed in an axial and angular manner around said axis A, and
- means (18, 20) for rotatably guiding said main barrel (12), which means are arranged at each end (14, 16) of said main barrel (12),
**characterised in that** the rotor (10) is modular, and **in that** said guide means (18, 20) comprise adapters (40, 42) suitable for being attached to ends (14, 16) of the barrel (12), each adapter (40, 42) being of a first type for rotatably guiding the barrel (12) on rollers (22, 24), or of a second type for rotatably guiding the barrel in a half-shell (23), and each type of adapter (40, 42) having the same predetermined moment of inertia and being able to be interchangeably attached to the barrel (12).

2. Calibration rotor (10) according to the preceding claim, **characterised in that** it comprises a secondary tubular barrel (44) which has a longitudinal axis B and of which the periphery comprises points (46) for attaching balance weights which are evenly distributed in an axial and angular manner around said axis B, and which secondary barrel is suitable for being attached in a cantilevered manner to an end of at least one adapter (40, 42) such that the longitudinal axes A and B are aligned.

3. Calibration rotor (10) according to the preceding claim, **characterised in that** the adapter (40, 42) of the first type comprises a single-piece tubular element (46) comprising at least one first end collar (48) suitable for being attached to a complementary end surface (16) of the main barrel (12), an intermediate portion (50) comprising a raceway (52) designed to engage with rollers (22, 24) of the balancing machine, and a second end collar (54) which is capable of selectively receiving a corresponding collar (56) of said secondary barrel (44).

4. Calibration rotor (10) according to claim 2, **characterised in that** the guide adapter (40, 42) of the second type comprises first and second coaxial tubular elements (66, 68) which are suitable for being fitted and attached one inside the other, comprise a first end collar (48) suitable for being attached to a complementary end collar (62) of the main barrel (12) and a second end collar (54) which is capable of selectively receiving a corresponding collar (56) of said secondary barrel (44), respectively, and define at the junction therebetween an annular groove (70) for receiving and axially immobilising an inner race (72) of a roller bearing (80) for guiding in a half-shell, said roller bearing (80) comprising an outer race (82) which is immobilised between a half-shell (23) and a flange (25) of the balancing machine.

5. Calibration rotor (10) according to the preceding claim, **characterised in that** the first tubular element (66) comprises, at an end opposite the end collar (54) thereof, a frustoconical outer bearing surface (84) designed for being received in a frustoconical inner bearing surface (86) of the second tubular element (68), a cylindrical bearing surface (88) adjacent to said frustoconical bearing surface (84), and a tubular portion (90) which is adjacent to the cylindrical bearing surface (88) and which has a larger diameter than said cylindrical bearing surface (88), said cylindrical bearing surface (88) defining the groove (70) between said tubular portion (88) and the second tubular element (68), and **in that** the first and second coaxial tubular elements (66 68) are attached to one another by means of screws which pass axially through one of said tubular elements (68), which are received in the other tubular element (66), and the tightening of which allows said inner race of the roller bearing (80) to be locked in the groove (70).

6. Calibration rotor (10) according to any of claims 3 to 5, **characterised in that** each adapter comprises a frustoconical annular bearing surface (90) for centring purposes which extends axially from each of the end collars (50, 54) thereof, and which is suitable for engaging with a complementary and corresponding frustoconical inner bearing surface of the main barrel (12) or secondary barrel (44).

7. Calibration rotor (10) according to any of claims 3 to 6, **characterised in that** it comprises means designed for engaging with means (30) for driving by means of a belt (32) or means for driving by means of a universal joint (92) of the balancing machine.

8. Calibration rotor (10) according to claim 7, **characterised in that** the means designed for engaging with the means (30) for driving by means of a belt (32) comprise at least one groove (34) which is formed on the periphery of the main barrel (12), which is arranged in particular in an intermediate part of said main barrel (12), and which is suitable for receiving a belt (32) for driving the balancing machine.

9. Calibration rotor (10) according to claim 8, **characterised in that** the means designed for engaging with the means (30) for driving by means of a universal joint (92) of the balancing machine comprise:
- the second end collar (54) of the guide adapter, which is designed so as to be complementary to a coupling collar (94) of the universal joint (92), and
- means for attaching, in particular by bolting, which are arranged between said second end collar (54) and said coupling collar (92).

10. Calibration rotor (10) according to any of claims 2 to 9, **characterised in that** it comprises a stop end piece (96) which is designed to be attached to a free end of at least one of the adapters (40, 42) and/or of the secondary barrel so as to limit the axial movements of the rotor (10) during operation.
